# EUROPEAN PATENT APPLICATION

(11) **EP 2 068 418 A2**
(43) Date of publication of application: **10.06.2009**
(21) Application number: 08021288.9
(22) Date of filing: 08.12.2008
(51) Int. Cl.: H02J 7/00, H02J 7/02

(54) **Non-contact charging apparatus having charging information display function and method thereof**

(30) Priority: 06.12.2007 KR 20070126389
(71) Applicant: LG Electronics Inc., Yongdungpo-gu Seoul 150-010 (KR)
(72) Inventor: Jee, Dong-Jo, Gwangmyeong Gyeonggi-Do (KR)
(74) Representative: Katérle, Axel

(57) **Abstract**

A non-contact charging apparatus having a charging information display function is presented. The non-contact charging apparatus includes a charging unit for charging a charge object in a non-contact manner placed in proximity to the charging unit, wherein the charging unit is configured to measure a charging efficiency and a charging status of the charge object on each position of the charging area, and to output the charging efficiency and the charging status via an output unit.

## Description

### BACKGROUND OF THE INVENTION

### Field of the Invention

The present invention relates to a non-contact charging apparatus having a charging information display function, and a method thereof.

### Discussion of the Related Art

A mobile terminal is a device which may perform various functions. Examples of such functions include data and voice communications, capturing images and video via a camera, recording audio, playing music via a speaker system, and displaying images and video on a display. Some terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components which form the mobile terminal.

As the mobile terminals have been configured to receive broadcast and multicast signals which permit viewing of content such as videos and television programs, a larger battery capacity is required. However, a large capacity battery that meets a user's needs has not been developed.

A user may not be able to perform various functionality when charging a battery according to a charging time and a charging method based on a remaining battery life is not properly performed. Various charging apparatuses and methods capable of conveniently charging a battery are being developed to solve the problem disclosed above.

A charging unit is required to charge a battery of a mobile terminal. The charging unit is connected to a general power source and configured to supply electric energy to the battery of the mobile terminal. The charging unit and the battery are, respectively, provided with a contact terminal. The battery may be charged as the two contact terminals are connected to each other.

However, when the charging unit and the battery are respectively provided with the contact terminal, appearance may be degraded, and the charging unit and the battery may be exposed to various elements, such as humidity. In this example, charging energy may be lost or charging may not be performed properly due to inferior contact between the charging unit and the battery.

Accordingly, a non-contact charging method capable of charging a mobile terminal in a non-contact manner without providing contact terminals to a charging unit and a battery of the mobile terminal has been proposed.

The conventional non-contact charging method includes an inductive coupling method and a capacitive coupling method. The inductive coupling method includes a charging unit provided with a primary coil, and an object to be charged, such as a mobile terminal provided with a secondary coil. When approaching the charging unit, the mobile terminal is charged as the primary coil and the secondary coil are inductively coupled to each other.

Alternatively, the capacitive coupling method includes a mobile terminal provided with a load side flat type conductor and a charging unit provided with a power side flat type conductor. The mobile terminal is charged as the load side flat type conductor and the power side flat type conductor are capacitively coupled to each other.

However, the conventional non-contact charging method (inductive or capacitive coupling) has the following problems. First, a user cannot easily determine an optimal position on the charging unit for charging efficiency. Second, a user cannot accurately check a current charging status of the mobile terminal.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a non-contact charging apparatus having a charging information display function is presented. The non-contact charging apparatus includes a charging unit for charging a charge object in a non-contact manner placed in proximity to the charging unit, wherein the charging unit is configured to measure a charging efficiency and a charging status of the charge object on each position of the charging area, and to output the charging efficiency and the charging status via an output unit.

In one feature the charge object comprises a battery to be charged in a non-contact manner and the charging unit comprises a pad for securely coupling the charge object. Additionally, a method for charging the charge object in a non-contact manner comprises at least one of an inductive coupling method and a capacitive coupling method.

In another feature the charging unit comprises a guide unit for distinguishing an optimal charge area of the charging unit. Additionally, the guide unit is visually distinguishable on the charging unit.

In yet another feature, the guide unit comprises a magnet reacting with a magnet provided at the charge object.

In still yet another feature, the guide unit includes a sensor configured to sense the charge object relative to the charging unit, and an indicator configured to generate a notification according to an output from the sensor.

In another feature, the charging unit includes a controller configured to measure the charging efficiency and the charging status of the charge object according to the position of the charge object relative to the charging unit when charging is initiated, and a charging information output unit configured to output the charging efficiency and the charging status measured by the controller. Additionally, the charging information output unit is implemented as at least one of a light emitting device, a display device, or an audio output device.

In another embodiment, a non-contact charging apparatus having a charging information display function. The non-contact charging apparatus includes a charging unit configured to charge a charge object placed in proximity to the charging unit, wherein the charge object is an object to be charged in a non-contact manner, a controller configured to measure a charging efficiency and a charging status of the charge object according to a position of the charge object relative to the charging unit, and a charging information output unit configured to output the charging efficiency and the charging status measured by the controller.

In yet another embodiment, a non-contact charging method is presented. The method includes sensing a non-contact position of a charge object placed in proximity to a charging unit, measuring a charging efficiency of the charge object on the sensed non-contact position in a non-contact manner, calculating a charging status of the charge object based on the measured charging efficiency, and outputting the measured charging efficiency and the calculated charging status.

These and other embodiments will also become readily apparent to those skilled in the art from the following detailed description of the embodiments having reference to the attached figures, the invention not being limited to any particular embodiment disclosed.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.

Fig. 1 illustrates a block diagram of a mobile terminal according to a first embodiment of the present invention.

Fig. 2 illustrates a front perspective view of the mobile terminal according to a first embodiment of the present invention.

Fig. 3 illustrates a rear perspective view of the mobile terminal according to a first embodiment of the present invention.

Fig. 4 illustrates a block diagram of a wireless communication system where the mobile terminal according to a first embodiment of the present invention may be operated.

Fig. 5 illustrates a block diagram of a non-contact charging apparatus having a charging information display function according to a first embodiment of the present invention.

Fig. 6 illustrates an example of a guide unit provided at a charging unit of Fig. 5.

Fig. 7 illustrates an example of a mechanical configuration of the charging unit for detecting an optimum charging position.

Fig. 8 illustrates another example of the mechanical configuration of the charging unit for detecting an optimum charging position.

Fig. 9 illustrates a block diagram of a non-contact charging apparatus in an inductive coupling manner according to the present invention.

Fig. 10 illustrates a block diagram of a non-contact charging apparatus in a capacitive coupling manner according to the present invention.

Fig. 11 illustrates a flowchart for a charging information display method in a non-contact charging apparatus according to a first embodiment of the present invention.

Fig. 12 illustrates a flowchart for a charging status display method in a non-contact charging apparatus according to a first embodiment of the present invention.

Fig. 13 illustrates an example of a method for displaying a charging status of a mobile terminal via a spectrum LED, in a non-contact charging apparatus having a charging status displaying function according an embodiment of the present invention.

### DETAILED DESCRIPTION OF THE PREFERRED EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

By way of non-limiting example only and for convenience and conciseness of the following description, the present invention is illustrated as a mobile phone. It is not intended to limit the scope of the present invention. The teachings of the present invention apply equally to other types of terminals.

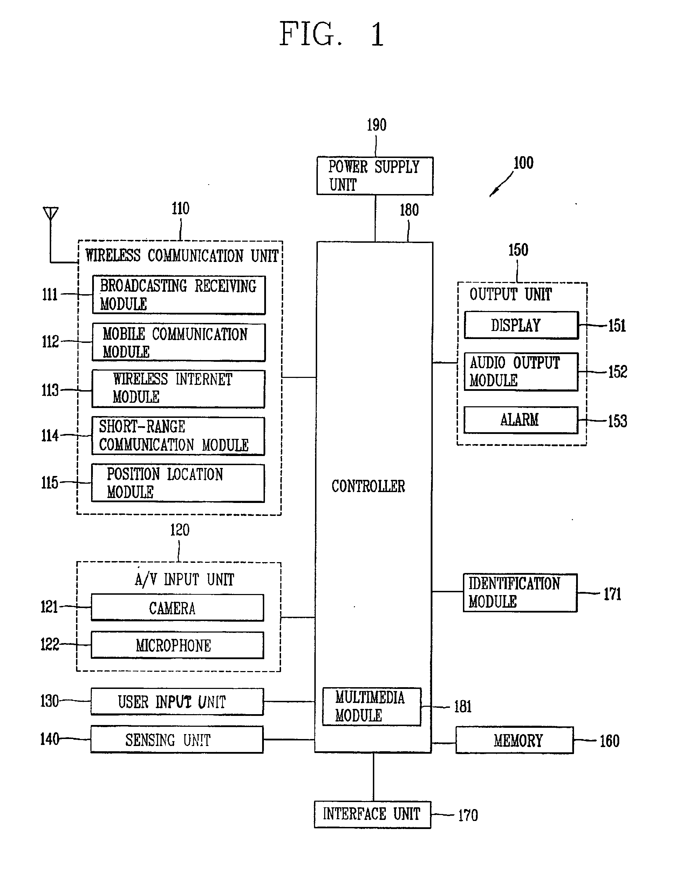

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, and a power supply 190. Fig. 1 shows the terminal 100 having various components, but it is understood that implementing all of the illustrated components is not a requirement. Greater or fewer components may alternatively be implemented.

Fig. 1 shows the terminal 100 having a wireless communication unit 110 configured with various components. For example, the wireless communication unit 110 may include at least one of a broadcast receiving module 111, a mobile communication module 112, a wireless internet module 113, a short-range communication module 114 and a position location module 115.

The broadcast receiving module 111 receives a broadcast signal and broadcast associated information from an external broadcast managing entity via a broadcast channel.

The broadcast channel may include a satellite channel or a terrestrial channel. The broadcast managing entity may be a system which transmits a broadcast signal or broadcast associated information.

Examples of the broadcast signal may include a TV broadcast signal, a radio broadcast signal, and a data broadcast signal. The broadcast signal may further include a data broadcast signal combined with a TV or radio broadcast signal. Examples of broadcast associated information include information associated with a broadcast channel, a broadcast program, or a broadcast service provider. For example, broadcast associated information may include an electronic program guide (EPG) of digital multimedia broadcasting (DMB) or electronic service guide (ESG) of digital video broadcast-handheld (DVB-H). The broadcast associated information may be provided via a mobile communication network, and received by the mobile communication module 112.

The broadcast receiving module 111 may receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®), and integrated services digital broadcast-terrestrial (ISDB-T).

The broadcast receiving module 111 may also receive multicast signals. Data received by the broadcast receiving module 111 may be stored in a suitable device, such as the memory 160.

The mobile communication module 112 transmits and receives wireless signals to and from one or more network entities, such as a base station or a Node-B. The wireless signals may represent audio, video, multimedia, control signaling, or data.

The wireless Internet module 113 provides Internet access for the terminal 100. The wireless Internet module 113 may be internally or externally coupled to the terminal 100.

The short-range communication module 114 facilitates short-range communications. Suitable technologies for implementing the short-range communications module 114 include radio frequency identification (RFID), infrared data association (IrDA), ultra-wideband (UWB), as well at the networking technologies commonly referred to as Bluetooth™ and ZigBee™.

The position-location module 115 identifies and obtains the location of the terminal 100. The position-location module 115 may be implemented using global positioning system (GPS) components which cooperate with associated satellites and network components.

The audio/video (A/V) input unit 120 provides audio or video signal inputs to the terminal 100. The A/V input unit 120 may include a camera 121 and a microphone 122. The camera receives and processes image frames of still pictures or video.

The microphone 122 receives an external audio signal while the terminal 100 is in a particular mode, such as a phone call mode, a recording mode, or a voice recognition mode. The audio signal is processed and converted into digital data. The terminal 100 and A/V input unit 120 may include assorted noise removing algorithms to remove noise generated in the course of receiving the external audio signal.

Data generated by the A/V input unit 120 may be stored in the memory 160, utilized by the output unit 150, or transmitted via one or more modules of communication unit 110. The terminal 100 may include two or more microphones 122 or cameras 121.

The user input unit 130 generates input data in response to user manipulation of an associated input device or devices. Examples of such devices include a keypad, a dome switch, a touchpad, a jog wheel, and a jog switch.

The sensing unit 140 provides status measurements for various aspects of the terminal 100. For example, the sensing unit may detect an open and close state of the terminal 100, relative positioning of components of the terminal, a change of position of the terminal, a change of position of a component of the terminal, a presence or absence of user contact with the terminal, orientation of the terminal, or acceleration or deceleration of the terminal. The sensing unit 140 may also sense the presence or absence of power provided by the power supply 190 and the presence or absence of a connection between the interface unit 170 and an external device.

The interface unit 170 may be implemented to connect the terminal with an external device. External devices include wired and wireless headphones, external charge objects, power supplies, storage devices configured to store data, or microphones. The interface unit 170 may be configured using a wired and wireless data port, a memory card socket, audio input and output ports (I/O), or video I/O ports.

The interface unit 170 may act as a passage for supplying the mobile terminal 100 with power from a cradle or delivering various command signals input from the cradle if the mobile terminal 110 is connected to an external cradle. Each of the various command signals input from the cradle or the power may operate as a signal enabling the mobile terminal 100 to recognize that it is correctly loaded in the cradle.

The identification module 171 may be configured as a chip for storing information required to authenticate the authority to use the mobile terminal 100. The identification module 171 may include a User Identity Module (UIM), a Subscriber Identity Module (SIM), and a Universal Subscriber Identity Module (USIM). Additionally, the identification module may be implemented as a smart card. Thus, the identification device may be coupled to the mobile terminal 100 via a port, such as the interface unit 170.

The output unit 150 may be configured to output an audio signal, a video signal, or an alarm signal. The output unit 150 may include the display 151, an audio output module 152, and an alarm 153.

The output unit 150 outputs information associated with the terminal 100. The display 151 is typically implemented to display information associated with the terminal 100. For example, the display 151 may provide a graphical user interface which includes information associated with a phone call if the terminal is operating in a phone call mode. The display 151 may display images which are associated with various modes, such as a video call mode or a photographing mode.

The display 151 may be configured as a touch screen working in cooperation with the input unit 130, in one embodiment of the present invention. This configuration allows the display 151 to function both as an output device and an input device.

The display 151 may be implemented using known display technologies such as a liquid crystal display (LCD), a thin film transistor-liquid crystal display (TFT-LCD), an organic light-emitting diode display (OLED), a flexible display, or a three-dimensional display. The terminal 100 may include one or more displays 151. An example of a two-display embodiment is one in which one display 151 is configured as an internal display which is viewable when the terminal 100 is in an opened position and a second display configured as an external display which is viewable in both the open and closed positions.

The audio output module 152 functions in various modes including a call-receiving mode, a call-placing mode, a recording mode, a voice recognition mode, or a broadcast reception mode. The audio output module 152 outputs audio relating to a particular function, such as a call notification, a message notification, or an error notification.

The output unit 150 is further shown having an alarm module 153, which may be used to identify the occurrence of an event associated with the terminal 100. An example of an output of the alarm module 153 includes a vibration for notifying a user.

The vibration module 153 may vibrate when the terminal 100 receives a call or message. Vibration may also be provided by the vibration module 153 in response to receiving user input at the terminal 100, thereby providing a tactile feedback mechanism. It is understood that the various outputs provided by the components of output unit 150 may be performed separately or performed using any combination of the components.

The memory 160 may store various types of data to support the processing, control, or storage requirements of the terminal 100. Examples of such data include program instructions for applications operating on the terminal, contact data, phonebook data, messages, pictures, or video.

The memory 160 shown in Fig. 1 may be implemented using any type of volatile and non-volatile memory or storage devices. Such devices may include random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The controller 180 controls the overall operations of the terminal 100. For example, the controller 180 performs the control and processing associated with voice calls, data communications, video calls, camera operations, and recording operations.

The controller 180 may include a multimedia module 181 which provides multimedia playback. The multimedia module 181 may be configured as part of the controller 180 or may be implemented as a separate component.

Moreover, the controller 180 is able to perform a pattern recognizing process for recognizing a writing input and a picture drawing input carried out on the touchscreen as characters or images.

The power supply 190 provides power to the various components of the terminal 100. The power provided may be internal power or external power.

Various embodiments described herein may be implemented in a computer-readable medium using computer software. The various embodiments may also be implemented in hardware.

A hardware implementation may be implemented using one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or other electronic units designed to perform the functions described herein. Some embodiments are implemented by controller 180.

A software implementation of the embodiments described herein may be implemented with separate software modules, such as procedures and functions, each of which perform one or more of the functions and operations described herein. The software code may be implemented with a software application written in any suitable programming language and may be stored in the memory 160 for execution by the controller 180 or a processor.

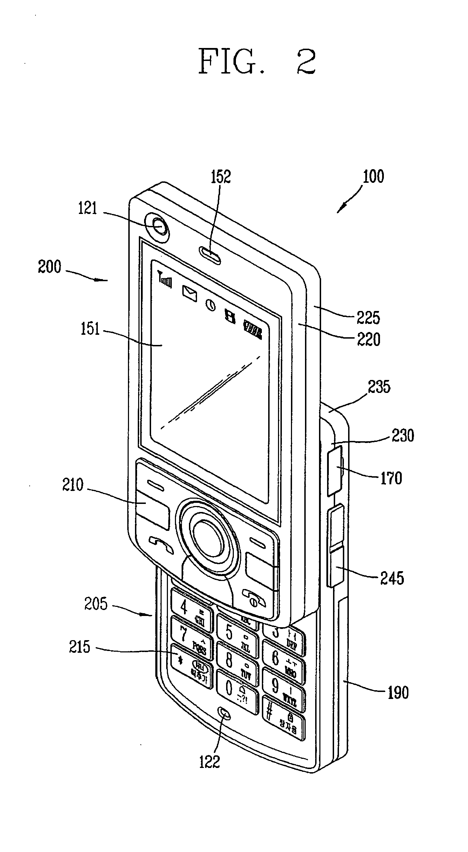

For clarity, further disclosure will primarily relate to a slide-type terminal 100. However such teachings apply equally to other types of terminals 100. Fig. 2 is a perspective view of a front side of a terminal 100 according to an embodiment of the present invention. As shown in Fig. 2, the terminal 100 is shown having a first body 200 configured to slideably cooperate with a second body 205.

In the case of a folder type of mobile terminal, the mobile terminal comprises a first body, and a second body of which one or more sides are folded or unfolded with respect to the first body.

The first body 200 slides relative to second body 205 between open and closed positions. The first body 200 is positioned over the second body 250 in the closed position such that the keypad 215 is substantially or completely obscured by the first body 200. The user may access the keypad 215, the display 151, and function keys 210 in the open position. The function keys 210 may be configured for a user to enter commands such as start, stop, or scroll.

The user input unit 130 is implemented using the function keys 210 and keypad 215. The function keys 210 are associated with the first body 200 and the keypad 215 is associated with the second body 205. The keypad 215 includes various keys such as numbers, characters, and symbols, to enable a user to place a call, prepare a text or multimedia message, and operate the terminal.

The terminal 100 is operable in either a standby mode or an active call mode. Typically, the terminal 100 functions in the standby mode when in the closed position and in the active mode when in the open position. The mode configuration may be changed as required or desired by the user.

The first body 200 is shown formed from a first case 220 and a second case 225 and the second body 205 is shown formed from a first case 230 and a second case 235. The respective first 220, 230 and second 225, 235 cases may be formed from a suitably ridge material such, as injection molded plastic, or formed using metallic material, such as stainless steel (STS) and titanium (Ti).

One or more intermediate cases may be provided between the first case 220 and second case 225 of the first body 200 or between the first case 230 and second case 235 of the second body 205. The first body 200 and the second body 205 may be sized to house electronic components necessary to support operation of the terminal 100.

The first body 200 is shown having a display unit 151, a camera 121 and audio output module 152. The camera 121 may be selectively positioned such that it may rotate or swivel relative to the first body 200.

The function keys 210 are positioned adjacent to a lower side of the display 151. The display 151 may implemented as an LCD or OLED. The display 151 may also be configured as a touchscreen having an underlying touchpad which generates signals responsive to user contact with the touchscreen.

The audio output module 152 may be implemented as a speaker. The camera 121 may be implemented to be suitable for a user to capture still images or video. The microphone 122 may be implemented to be suitable for receiving user's voice or various sounds.

The second body 205 is shown having a microphone 122 positioned adjacent to the keypad 215 and side keys 245 positioned along the side. The side keys 245 may be configured as hot keys, such that the side keys are associated with a particular function of the terminal 100.

An interface unit 170 is shown positioned adjacent to the side keys 245. A power supply 190 in a form of a battery is located on a lower portion of the second body 205.

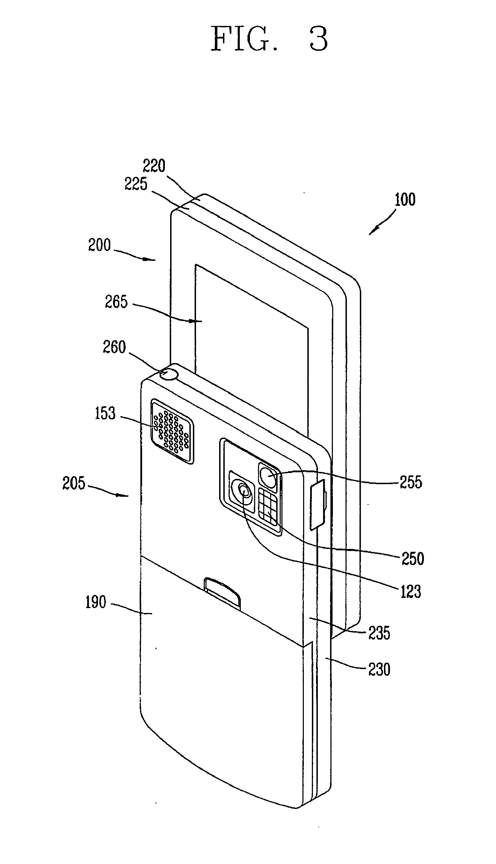

Fig. 3 is a rear view of the terminal 100 shown in Fig. 2. As shown in Fig. 3, the second body 205 includes a camera 123, a flash 250, and a mirror 255.

The flash 250 operates in conjunction with the camera 123. The mirror 255 is useful for assisting a user to position the camera 123 in a self-portrait mode.

The camera 123 of the second body 205 faces a direction opposite to a direction faced by the camera 121 of the first body 200. The camera 121 of the first body 200 and camera 123 of the second body 205 may have the same or different capabilities.

In one embodiment, the camera 121 of the first body 200 operates with a relatively lower resolution than the camera 123 of the second body 205. Such an arrangement works well during a video conference in which reverse link bandwidth capabilities may be limited. The relatively higher resolution of the camera 123 of the second body 205 is useful for obtaining higher quality pictures.

The second body 205 also includes an audio output module 153 configured as a speaker which is located on an upper side of the second body. The audio output module 152 of the first body 200 and the audio output module 153 of second body 205 may cooperate to provide stereo output. Moreover, either or both of the audio output modules 152 and 153 may be configured to operate as a speakerphone.

A broadcast signal receiving antenna 260 is shown located at an upper end of the second body 205. The antenna 260 functions in cooperation with the broadcast receiving module 111. The antenna 260 may be fixed or configured to retract into the second body 205.

The rear side of the first body 200 includes a slide module 265. The slide module 265 which slideably couples with a corresponding slide module (not shown) located on the front side of the second body 205.

It is understood that the illustrated arrangement of the various components of the first body 200 and the second body 205 may be modified as desired. Some or all of the components of one body may alternatively be implemented on the other body. In addition, the location and relative positioning of the components are not critical to many embodiments and, therefore, the components may be positioned at locations which differ from those shown by the representative figures.

The terminal 100 may operate in a communication system capable of transmitting data via frames or packets. The communication system may include wired communication, wireless communication, or satellite-based communication system.

The communication system may utilize various systems such as frequency division multiple access (FDMA), time division multiple access (TDMA), code division multiple access (CDMA), universal mobile telecommunications system (UMTS), long term evolution (LTE) of the UMTS, or the global system for mobile communications (GSM). By way of non-limiting example, further description will relate to a CDMA communication system, but such teachings apply equally to other system types.

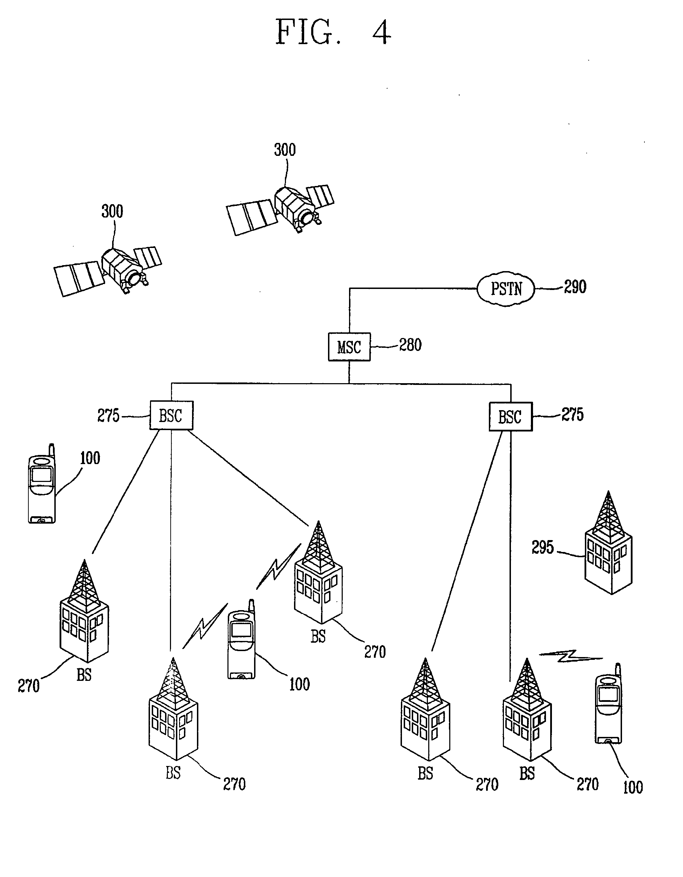

As shown in Fig. 4, a CDMA wireless communication system is shown having a plurality of terminals 100, a plurality of base stations (BS) 270, base station controllers (BSC) 275, and a mobile switching center (MSC) 280. The MSC 280 is configured to interface with a conventional public switch telephone network (PSTN) 290 and is also configured to interface with the BSCs 275.

The BSCs 275 are coupled to the BSs 270 via backhaul lines. The backhaul lines may be configured in accordance with any of several known interfaces including E1/T1, ATM, IP, PPP, Frame Relay, HDSL, ADSL, or xDSL. It is to be understood that the system may include more than two BSCs 275.

Each BS 270 may include one or more sectors, each sector having an omnidirectional antenna or an antenna pointed in a particular direction radially away from the BS 270. Each sector may include two antennas for diversity reception. Each BS 270 may be configured to support a plurality of frequency assignments, with each frequency assignment having a particular spectrum.

The intersection of a sector and frequency assignment may be referred to as a CDMA channel. The BSs 270 may also be referred to as base station transceiver subsystems (BTSs). In an alternate embodiment, the term "base station" may be used to refer collectively to a BSC 275 and one or more BSs 270.

The BSs 270 may also be denoted "cell sites." Alternatively, individual sectors of a given BS 270 may be referred to as cell sites.

A broadcasting transmitter (BT) 295 is shown broadcasting to terminals 100 operating within the system. The broadcast receiving module 111 of the terminal 100 is configured to receive broadcast signals transmitted by the BT 295. Similar arrangements may be implemented for other types of broadcast and multicast signaling.

Fig. 4 also shows several global positioning system (GPS) satellites 300. The GPS satellites 300 facilitate locating the position of some or all of the terminals 100. The position-location module 115 of the terminal 100 is typically configured to cooperate with the satellites 300 to obtain position information.

Other types of position detection technology may be used in addition to or instead of GPS location technology. Some or all of the GPS satellites 300 may alternatively or additionally be configured to provide satellite DMB transmissions.

The BSs 270 receive sets of reverse-link signals from various terminals 100 during operation of the wireless communication system. The terminals 100 are performing calls, messaging, or other communications.

Each reverse-link signal received by a BS 270 is processed within that BS. The resulting data is forwarded to an associated BSC 275.

The BSC 275 provides call resource allocation and mobility management functionality including soft handoffs between base stations 270. The BSCs 275 also route the received data to the MSC 280, which provides additional routing services for interfacing with the PSTN 290. Similarly, the PSTN interfaces with the MSC 280 and the MSC interfaces with the BSC 275, which in turn control the BSs 270 to transmit sets of forward-link signals to the terminals 100.

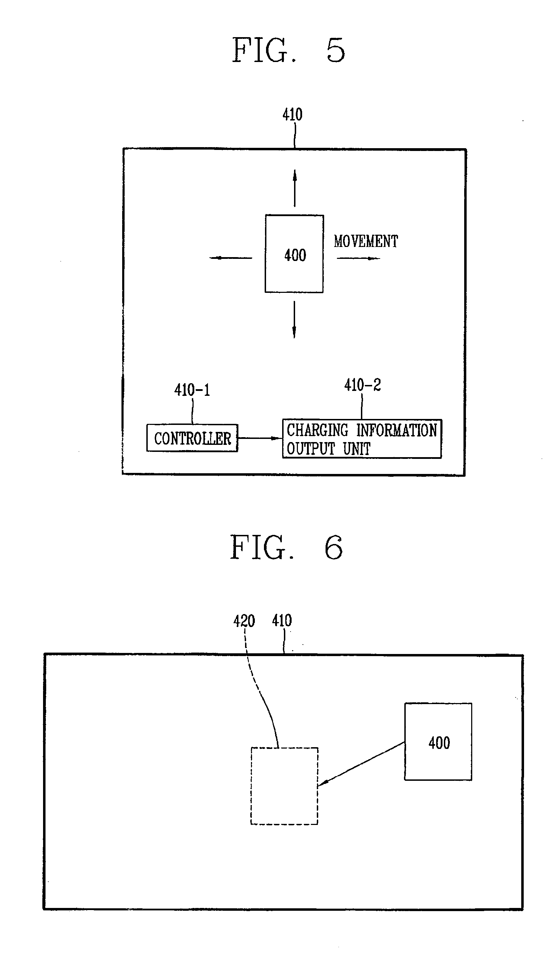

Fig. 5 illustrates a block diagram of a non-contact charging apparatus having a charging information display function according to a first embodiment of the present invention.

As shown in Fig. 5, the non-contact charging apparatus having a charging information display function includes a charge object 400, which is an object to be charged in a non-contact manner, and a charging unit 410 configured to provide a current or a voltage for charging the charge object 400 in a non-contact manner. The charging unit 410 may be configured to display a charging efficiency according to a position of the charge object 400 relative to the charging unit 410. The charging unit may further output a charging status via visual or audio notifications.

The charge object 400 may include the mobile terminal 100 or a battery, such as power supply 190. The battery may be detachably mounted to the mobile terminal.

The charging unit 410 may include a controller 410-1 for measuring charging efficiency and charging status of the charge object 400 according to a distance between the charge object 400 and the charging unit 410 or a position of the charge object 400. The charging unit 410 may also include a charging information output unit 410-2 configured to output the charging efficiency and the charging status measured by the controller 410-1 via visual or audio notifications.

In the example of an inductive coupling method, the controller 410-1 measures a charging efficiency of the charge object 400 by determining the strength of a magnetic field occurring between the charging unit 410 and the charge object 400. The controller 410-1 may also measure the charging efficiency of the charge object 400 via the strength of a current induced to the charge object 400. In the example of a capacitive coupling method, the controller 410-1 measures a charging efficiency of the charge object 400 by determining impedance between the charging unit 410 and the charge object 400, or a strength of an AC induced to the charge object. The controller 410-1 may calculate a charging status according to the measured charging efficiency and charging time.

The charging information output unit 410-2 may output the charging efficiency and the charging status measured by the controller 410-1 via colors, sound, text, and images. Accordingly, the charging information output unit 410-2 may be implemented as at least one of a light emitting device such as a light emitter diode (LED), a display device such as a liquid crystal display (LCD), and an audio output device.

The controller 410-1 and the charging information output unit 410-2 may be integrally implemented with the charging unit 410, or may be implemented separately from the charging unit 410.

The charging unit 410 may be configured to have a structure in which the charge object 400 is stably located, such as a pad. Additionally, the charging unit 410 may include a mechanical configuration to ensure a certain degree of charging efficiency. Specifically, a guide unit for the charge object 400 may be formed at the charging unit 410.

Fig. 6 illustrates one example of a guide unit provided at the charging unit 410. As illustrated in Fig. 6, the guide unit serves to display a position on the charging unit 410 in the form of lines or a groove which indicates an area for optimum charging efficiency 420. The number of areas for optimum charging efficiency 420 may vary according to the number of charge objects 400. Additionally, the shape and size of the area for optimum charging efficiency 420 may be variable.

Furthermore an additional device may be included in the charging unit 410 for ensuring a certain degree of charging efficiency.

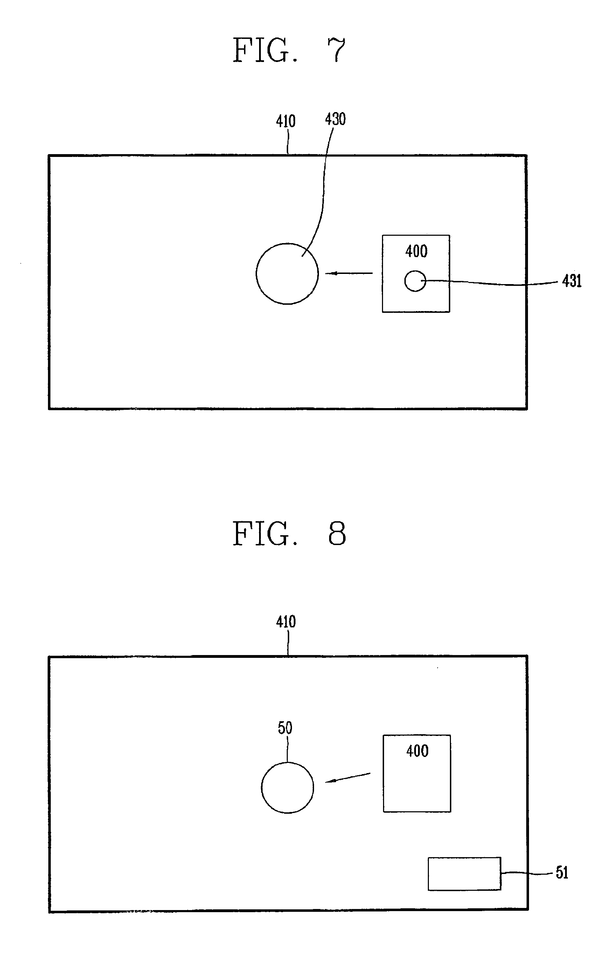

As illustrated in Fig. 7, a magnet 430 and 431 may be, respectively, provided to the charging unit 410 and the charge object 400, thereby allowing the charge object 400 to be located on a specific position of the charging unit 410.

As illustrated in Fig. 8, a sensor 50 and an indicator 51 may be additionally installed at the charging unit 410, thereby providing visual or audio notifications when the charge object 400 approaches an optimum position. In this example, the charging information output unit 430 may be used instead of the indicator 51.

In one embodiment of the present invention, the non-contact charging method includes an inductive coupling method or a capacitive coupling method. In the example of the inductive coupling method, the charge object 400 may include a secondary coil (inductive coil) and the charging unit 410 may include a primary coil (magnetic field generating coil). The charge object 400 is charged as the primary coil and the secondary coil are inductively coupled to each other. Alternatively, in the example of the capacitive coupling method, the charge object 400 may include a load side flat type conductor and the charging unit 410 may include a power side flat type conductor. The charge object 400 is charged as the load side flat type conductor and the power side flat type conductor are capacitively coupled to each other.

The operation of the non-contact charging apparatus having a charging information display function according to an embodiment the present invention will be explained in more detail with reference to the attached drawings.

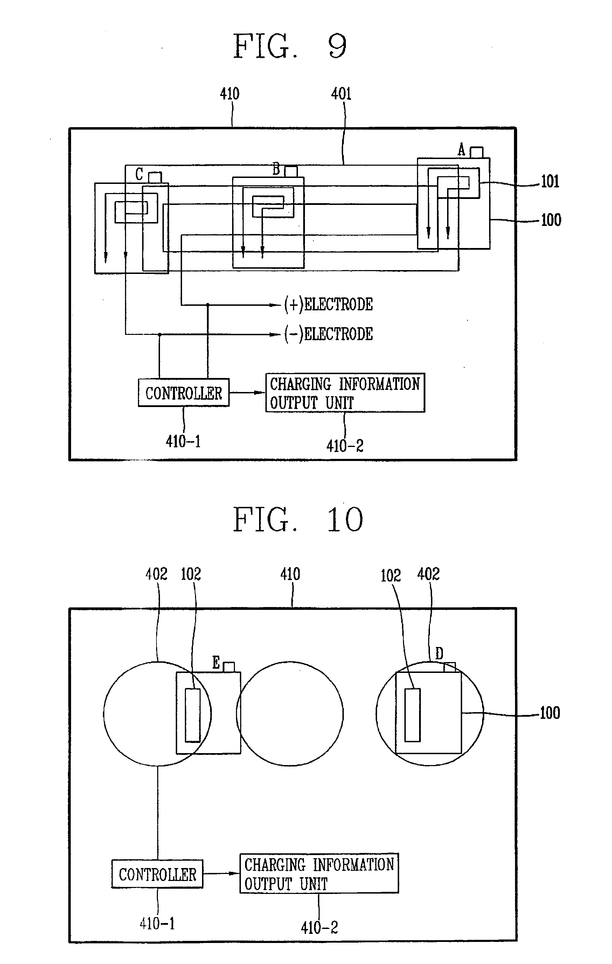

Fig. 9 illustrates a block diagram of a non-contact charging apparatus in an inductive coupling manner according to an embodiment of the present invention. For explanatory convenience, the charge object 400 is implemented as the mobile terminal 100.

As illustrated in to Fig. 9, in the example of a non-contact charging method in an inductive coupling manner, the mobile terminal 100 may include a secondary coil (induction coil) 101 and the charging unit 410 may include a primary coil (magnetic field generating coil) 401.

The mobile terminal 100 may have different charging efficiencies with respect to various points of the charging unit 410. For example, the mobile terminal 100 has a highest charging efficiency on point "B", because point "B" has the greatest inductive coupling force between the primary coil 402 and the secondary coil 101.

Upon initiation of charging the mobile terminal 100, the controller 410-1 measures a charging efficiency of the mobile terminal 100 disposed at the charging unit 410 and outputs the measured charging efficiency to the charging information output unit 410-2. Moreover, the controller 410-1 continuously checks the charging status of the mobile terminal 100 while the charging is performed in order to output the status to the charging information output unit 410-2. The charging status may be determined by multiplying the charging efficiency with the charging time. Accordingly, the charging information output unit 410-2outputs a charging efficiency and a charging status via visual or audio notifications.

Fig. 10 illustrates a block diagram of a non-contact charging apparatus in a capacitive coupling manner according to a second embodiment of the present invention. For explanatory convenience, the charge object 400 is referenced as the mobile terminal 100.

As illustrated in Fig. 10, in the example of a non-contact charging method in a capacitive coupling manner, the mobile terminal 100 may include a load side flat type conductor 102 and the charging unit 410 may include a power side flat type conductor 402. The mobile terminal 100 is charged as the load side flat type of conductor 102 and the power side flat type of conductor 402 are capacitively coupled to each other.

In the example of a non-contact charging apparatus in a capacitive coupling manner, a charging efficiency of the mobile terminal 100 depends on the position of the mobile terminal 100 in relation to the power side flat type conductor 402 on the charging unit 410. Specifically, as illustrated in position D of Fig. 10, the mobile terminal 100 has a uniform charging efficiency when the mobile terminal 100 is evenly distributed on the power side flat type conductor 402. However, as illustrated in position E of Fig. 10, the mobile terminal 100 has different charging efficiencies when the mobile terminal is not evenly placed on the power side flat type conductor 402. Therefore, similar to the inductive coupling method, the mobile terminal 100 may have an enhanced charging efficiency when the mobile terminal 100 is located in a position where the power side flat type of conductor 402 is evenly distributed in relation to the mobile terminal 100.

The mobile terminal 100 illustrated in Fig. 10 has a higher charging efficiency in position "D" where a large amount of the power side flat type of conductor 402 is distributed as compared to when the mobile terminal 100 is in position "E".

Once the mobile terminal 100 is disposed on the charging unit 410, the controller 410-1 measures a charging efficiency of the mobile terminal 100 at each position on the charging unit 410 in a capacitive coupling manner between the load side flat type conductor 102 of the mobile terminal 100 and the power side flat type conductor 402 of the charging unit 410. The controller 410-1 outputs the measured charging efficiency to the charging information output unit 410-2. The controller 410-1 also checks a charging status of the mobile terminal 100, while the charging is executed, and outputs the status to the charging information output unit 410-2. Accordingly, the charging information output unit 410-2 outputs the charging efficiency and the charging status measured by the controller 410-1 to a user via visual or audio notifications.

Hereinafter, a method for displaying charging information by the non-contact charging apparatus having a charging information display function will be explained in more detail.

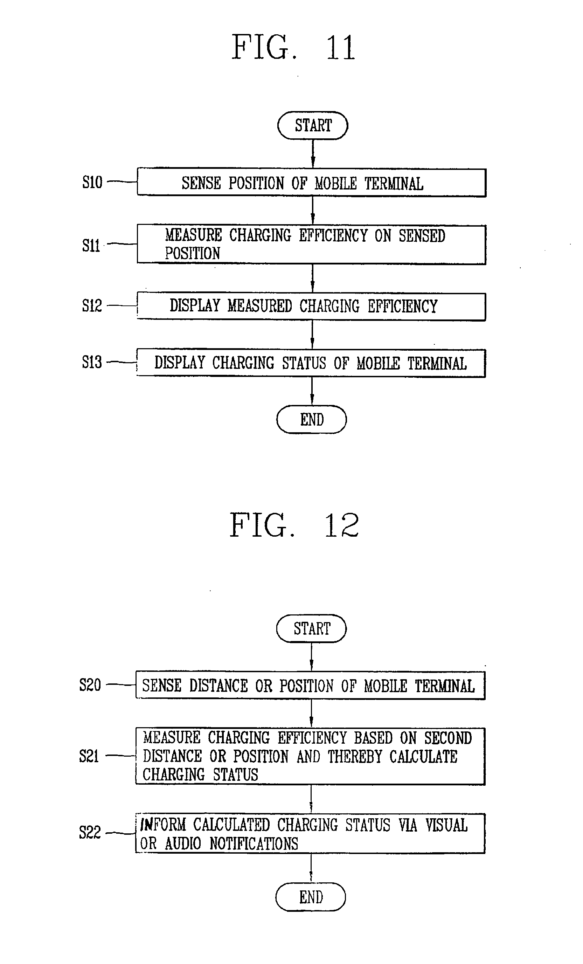

Fig. 11 illustrates a flowchart for a charging information display method in a non-contact charging apparatus according to a first embodiment of the present invention. For explanatory convenience, it is assumed that the charge object 400 is implemented as the mobile terminal 100.

As illustrated in Fig. 11, a user places the mobile terminal 100 on the charging unit 410 so as to charge the mobile terminal 100 in a non-contact manner. The user may move the mobile terminal 100 to an optimum position of the charging unit 410 via the methods shown in FIGS. 6 to 8.

Once the mobile terminal 100 is placed on a predetermined position of the charging unit 410, the controller 410-1 senses the position of the mobile terminal 100 (S10). The controller 410-1 then measures a charging efficiency of the mobile terminal 100 according to the sensed position (S11). In the example of an inductive coupling method, a charging efficiency of the mobile terminal 100 is measured by a strength of a magnetic field occurring between the charging unit 410 and the mobile terminal 100, or a strength of a current induced to the mobile terminal 100. However, in the example of a capacitive coupling method, the controller 410-1 measures a charging efficiency of the mobile terminal 100 by using an impedance between the charging unit 410 and the mobile terminal 100, or a strength of an alternating current (AC) induced to the mobile terminal 100. Accordingly, the charging information output unit 410-2 outputs the charging efficiency measured by the controller 410-1 to a user via visual or audio notifications (S12). For example, when a charging efficiency of the mobile terminal 100 is more than a predetermined level, the charging information output unit 410-2 may generate light or sound. Specifically, the charging information output unit 410-2 may display an indication such as "excellent charging efficiency" or "90%", for example.

Once a user initiates charging, in an inductive coupling manner or a capacitive coupling manner, the controller 410-1 determines the charging status of the mobile terminal 100 on the sensed position. The controller 410-1 outputs the charging status of the mobile terminal 100 to the charging information output unit 410-2. The controller 410-1 recognizes initiation of charging when the mobile terminal 100 has not moved for a predetermined time, or via the user's input. The charging status may be calculated by multiplying the measured charging efficiency with charging time.

The charging information output unit 410-2 informs the user of the charging status of the mobile terminal 100 measured by the controller 410-1 via visual or audio notifications (S 13).

Fig. 12 illustrates a flowchart for a charging status display method in a non-contact charging apparatus according to a first embodiment of the present invention. For explanatory convenience, the charge object 400 is considered as the mobile terminal 100.

As illustrated in Fig. 12, a user places the mobile terminal 100 near the charging unit 410 in order to non-contact charge the mobile terminal 100 in an inductive coupling manner or a capacitive coupling manner.

Once the mobile terminal 100 is placed at a predetermined position in relation to the charging unit 410, the controller 410-1 senses a distance between the mobile terminal 100 and the charging unit 410, or a position of the mobile terminal 100 (S10).

In the example of an inductive coupling method, the controller 410-1 measures a charging efficiency of the mobile terminal 100 by a strength of a magnetic field occurring between the charging unit 410 and the mobile terminal 100 or a strength of a current induced to the mobile terminal 100. Alternatively, in the example of a capacitive coupling method, the controller 410-1 measures a charging efficiency of the mobile terminal 100 by using an impedance between the charging unit 410 and the mobile terminal 100 or a strength of an AC induced to the mobile terminal 100.

Once a charging efficiency of the mobile terminal 100 is measured, the controller 410-1 multiplies the measured charging efficiency with charging time thereby to calculate a charging status. Then, the controller 410-1 outputs the charging status to the charging information output unit 410-2 (S21).

The charging information output unit 410-2 informs the user of the charging status of the mobile terminal 100 via visual or audio notifications (S22). The charging status may be indicated textually, such as, "charging", "charged completely", and "charged by 20%", for example. Additionally, the charging status may be indicated in different shapes or colors. For example, the output unit 410-2 may be configured to display a small box, such as "□", when the mobile terminal 100 is being charged and a large box, such as "□", when the mobile terminal 100 is completely charged.

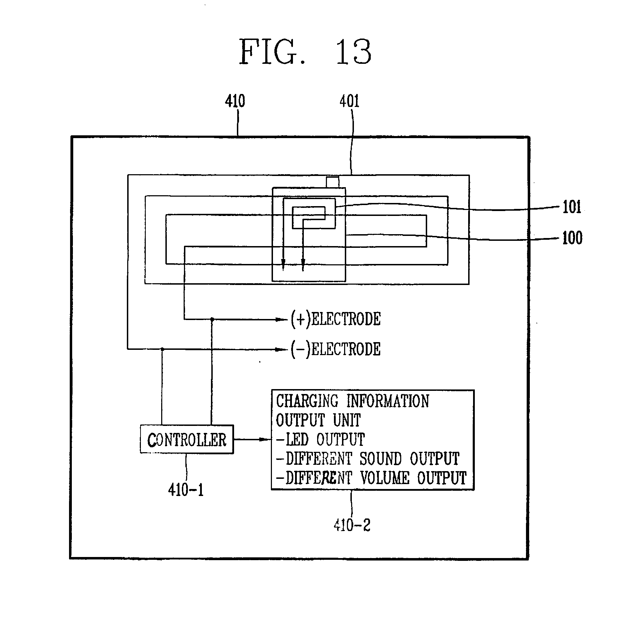

Furthermore, the charging information output unit 410-2 may display a charging status of the mobile terminal 100 via different types or volumes of sound. For example, as illustrated in Fig. 13, the charging information output unit 410-2 may inform a user of a charging status of the mobile terminal 100 via a spectrum LED, different sound types, or different sound volumes.

A user may easily check the operating status of the non-contact charging apparatus in addition to the current charging status of the mobile terminal 100 via the charging efficiency and the charging status.

In one embodiment of the present invention, a charging status is output via the charging information output unit 410-2 integrally provided with the charging unit 410. However, a charging efficiency and a charging status of the mobile terminal 100 may be output via the mobile terminal 100. In this example, the output unit 150 of the mobile terminal 100 informs a user of the charging status of the mobile terminal 100, under control of the controller 180, via the display 151, the audio output module 152, and the alarm 153. The controller 180 may directly measure a charging status of the mobile terminal 100, or may be provided with the charging status from the controller 410-1 of the non-contact charging apparatus 410.

In the preferred embodiment, the method may be implemented by computer-readable media having programs recorded therein. The computer-readable media includes all types of recording apparatuses having data therein that can be read by a computer system, such as ROM, RAM, CD-ROM, magnetic tape, floppy disk, and optical data storage device. The computer-readable media may include a device implemented via a carrier wave, such as a transmission via the Internet. The computer may include the controller 180 of the mobile terminal 100.

According to the preferred embodiment of the present invention, the mobile terminal may be charged more effectively since a charging efficiency and a charging status of the mobile terminal 100 is measured according to each position and output in real time. More specifically, charging efficiencies of the mobile terminal 100 measured on each position of the charging unit are output such that a user may select an optimum charging position. Thus, allowing the user to charge the mobile terminal more efficiently.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

Various embodiments will be described in conjunction with a mobile terminal. However, such teachings apply also to other types of electronic devices. Examples of such devices include portable devices, digital broadcast receiving terminal, an MP3 player, a personal digital assistant (PDA), portable multimedia player (PMP), and the like.

Moreover, various methods will be described in conjunction with regard to a mobile terminal. However, it is to be understood that embodiments of the present invention are not so limited and may alternatively be implemented using other types of electronic devices, such as those noted above.

## Claims

1. A non-contact charging apparatus having a charging information display function, the non-contact charging apparatus comprising:
a charging unit for charging a charge object in a non-contact manner placed in proximity to the charging unit, wherein the charging unit is configured to measure a charging efficiency and a charging status of the charge object on each position of the charging area, and to output the charging efficiency and the charging status via an output unit.

2. The apparatus of claim 1, wherein the charging unit comprises:
a controller configured to measure the charging efficiency and the charging status of the charge object according to the position of the charge object relative to the charging unit when charging is initiated; and
a charging information output unit configured to output the charging efficiency and the charging status measured by the controller.

3. A non-contact charging apparatus having a charging information display function, the non-contact charging apparatus comprising:
a charging unit configured to charge a charge object placed in proximity to the charging unit, wherein the charge object is an object to be charged in a non-contact manner;
a controller configured to measure a charging efficiency and a charging status of the charge object according to a position of the charge object relative to the charging unit; and
a charging information output unit configured to output the charging efficiency and the charging status measured by the controller.

4. The apparatus of any one preceding claim, wherein the charge object comprises a battery and the charging unit comprises a pad for securely coupling the charge object.

5. The apparatus of any one preceding claim, wherein a method for charging the charge object comprises at least one of an inductive coupling method and a capacitive coupling method.

6. The apparatus of any one preceding claim, wherein the charging unit comprises a guide unit for distinguishing an optimal charge area of the charging unit, wherein preferably the guide unit is visually distinguishable on the charging unit.

7. The apparatus of claim 6, wherein the guide unit comprises a magnet reacting with a magnet provided at the charge object.

8. The apparatus of claim 6 or 7, wherein the guide unit comprises:
a sensor configured to sense the proximity of the charge object relative to the charging unit; and an indicator configured to generate a notification according to an output from the sensor.

9. The apparatus of any one of claims 2 to 8, wherein the charging information output unit is implemented as at least one of a light emitting device, and display device, or an audio output device.

10. A non-contact charging method, the method comprising:
sensing a non-contact position of a charge object placed in proximity to a charging unit;
measuring a charging efficiency of the charge object on the sensed non-contact position in a non-contact manner;
calculating a charging status of the charge object based on the measured charging efficiency; and
outputting the measured charging efficiency and the calculated charging status.

11. The method of claim 10, wherein the charge object comprises a battery, and the charging unit comprises a pad for securely coupling the charge object.

12. The method of claim 10 or 11, wherein the non-contact charging method is at least one of an inductive coupling method and a capacitive coupling method.

13. The method of claim 12, wherein the charging efficiency for the inductive coupling method is measured by determining a strength of a magnetic field occurring between the charging unit and the charge object

14. The method of claim 12 or 13, wherein the charging efficiency for the capacitive coupling method is measured by determining an impedance between the charging unit and the charge object.

15. The method of any one of claims 10 to 14, wherein the charging efficiency and the charging status of the charge object are output via at least a visual or audio output.
